Europäisches Patentamt

European Patent Office

Office européen des brevets

(11) Publication number: **0 148 768**
A2

# EUROPEAN PATENT APPLICATION

(21) Application number: 85300083.4

(22) Date of filing: 07.01.85

(51) Int. Cl.⁴: **F 16 B 2/02**, E 21 B 19/00, E 21 B 7/12 // E02B17/00

(30) Priority: **06.01.84 GB 8400249**

(43) Date of publication of application: **17.07.85** Bulletin 85/29

(84) Designated Contracting States: **AT BE CH DE FR GB IT LI LU NL SE**

(71) Applicant: Webco Industrial Rubber Limited, Greenbank Place, Tullos Aberdeen AB1 4BT Scotland (GB)

(72) Inventor: **Webster, George Andrew, 1 Leggart Place, Aberdeen AB1 5UN Scotland (GB)**

(74) Representative: **Pattullo, Norman et al, Ian G. Murgitroyd and Company 49 Bath Street, Glasgow G2 2DL Scotland (GB)**

(54) **Clamp.**

(57) A structural clamp especially for use in the offshore oil industry for clamping marine risers and the like and which allows longitudinal and lateral movement of the riser relative to the clamp, the clamp having spaced resilient projections whose outermost faces for engaging the clamped structure have low-fiction material such as polytetrafluorethylene. The projections may be in the form of castellated ribs which are aligned vertically to allow water to drain through the clamp.

EP 0 148 768 A2

Clamp

This invention relates to a lining for use in structural clamp.

There is a need to accommodate vertical and horizontal movements of riser pipes and caissons within their clamping systems on offshore platforms. The amount of movement to be catered for is affected by such factors as wave loading and temperature differentials. It is important to restrict the resultant loadings transferred by these movements into the structural members to a minimum.

It is therefore desirable that some clamps for structural members be able to slip under load.

According to the present invention there is provided a structural clamp having a body, and spaced resilient projections on the body, the projections having outermost faces of low-friction material for engaging a structure to be clamped.

Preferably the low friction surface has a coefficient of friction of less than 0.3.

Preferably also the low friction surface is a layer of polytetrafluorethylene (PTFE) or similar material which may be bonded to the projections.   The thickness of the layer may be from 0.1 to 5 mm, according to design and wear requirements.

Preferably also the resilience of the projections is provided by elastomer material.

The elastomer material may be fixed to the clamp body, which may be for example of steel, by a hot bonding vulcanisation process or by a suitable adhesive.

Preferably the projections are in the form of ribs or castellations.

Further according to the present invention there is provided a resilient lining for use in a structural clamp, the lining having spaced projections whose outermost faces are of low-friction material for engaging a structure to be clamped.

The various dimensions of the clamp lining are dependent on the required characteristics of the clamp design.   For example the lining between the projections may vary in thickness between 4mm and 50mm.   The height of the projections may vary between 5mm and 25mm.   The width of the projections may vary between 10mm and 50mm and the spacing between the projections may also vary between 10mm and 50mm.

An embodiment of the present invention will now be described, by way of example, with reference to the accompanying drawings, in which:

Fig. 1 is a side view of part of one embodiment of a clamp lining of a structural clamp in
accordance with the present invention;
Fig. 2 is a top plan view of part of clamp
lining of Fig. 1;  and
Fig. 3 is a top plan view of a clamp of this
invention.

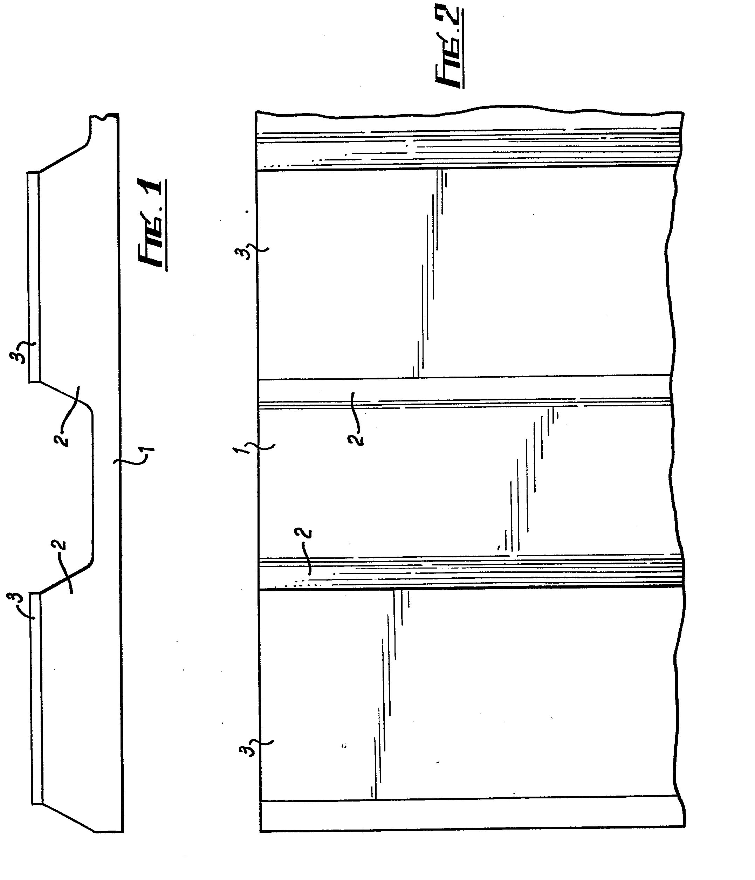

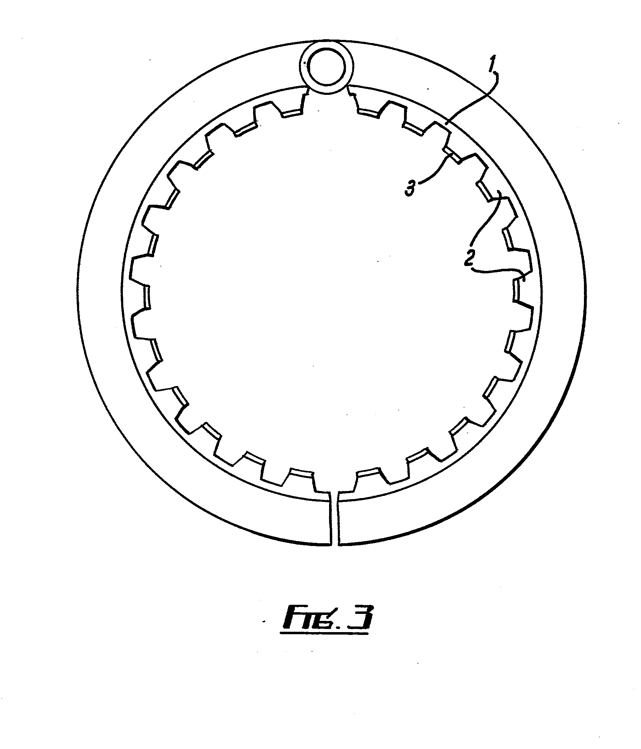

Referring to the drawings, a clamp lining for use in
structural clamps comprises a moulded elastomeric sheet 1
having ribs 2 of castellated cross-section.    Each rib 2 has
bonded to its surface a strip 3 of PTFE having a surface
coefficient of friction of less than 0.3.

In the present case the thickness of the sheet 1 is 7 mm,
the height of the ribs 2 is 20 mm, the width of the top of
the ribs 2 is 50 mm and the spacing between the tops of the
ribs 2 is 50 mm.

The PTFE strip 3 has the same width and length as the rib 2
and has a thickness of 3 mm.

To manufacture the clamp lining for use in this embodiment
of the invention an elastomer material which meets the
requirements of BS903 is used.    In the present case the
elastomer material is a polychloroprene rubber CER 65
produced by Webco Industrial Rubber Limited.    This rubber
has a hardness of 65 IRHD units, specific capacity of 1.36,
tensile strength of 17.2 $N/m^2$, elongation of break 400%,
tear strength of 45.5 N/mm, compression set maximum 24 hours
at 70°C of 15%, abrasion resistance Akron of 0.3g/1000 revs,
ozone resistance in pphm at 40°C at 20% elongation for 70
hours no cracking, sea water resistance maximum volume swell
3.5% at 70°C for 70 days immersion.

A castellated sheet for use in the clamp lining is made by cutting a sheet of PTFE to the required castellation length and width, the sheet being etched on one surface. The etched surface is then washed with methanol and one coat of a proprietary primer is applied and allowed to dry. A proprietary bonding agent is then applied to the primed and etched surface and allowed to dry, and the strips are laid with the etched surface uppermost along the base of a mould shaped as the finished castellated sheet.

Uncured CER 65 rubber sheet is placed into the mould on top of the PTFE, the mould is closed and a pressure of 200 tonnes applied at a temperature of 150-180°C. This causes the rubber to become flowable and it is squeezed into the castellations in the mould. The applied heat causes crosslinking between the PTFE and the rubber through the bonding agent, and results in the rubber becoming vulcanised.

The moulded lining in the form of castellated sheet is then removed from the mould and allowed to cool.

The prepared clamp lining sheet is then ready to be applied to the clamp surface by one of two bonding techniques. The first of these is the hot bond.

The steel clamp is pre-heated to 90°C to dry its surface and is then shotblasted to SA 3. When the metal has cooled below 45°C a proprietary primer is applied and allowed to dry. A bonding agent is then applied and again allowed to dry. A solution of the polychloroprene rubber in toluene is then prepared and brush applied to the clamp surface to render it tacky.

The bottom face of the castellated sheet is then buffed and a coat of bonding agent is applied and allowed to dry.

A calendered sheet of uncured polychloroprene rubber 1-2 mm thick is then provided and its surface is wiped with toluene and pre-heated to 50-70°C. The calendered sheet is then applied to the clamp surface, and rolled and "stitched" to exclude air. The outer face of the applied calendered sheet is then washed with toluene to render it tacky.

The castellated sheet is then applied and rolled and "stitched" to exclude air. The lined clamp is then closed around a central mandrel to consolidate the lining, this being particularly useful on small diameter clamps. The clamp is then pressed in an autoclave at 60 psi steam at 153°C for 1.5-2 hours, and then allowed to cool.

The second bonding technique is the cold bond. The clamp lining is applied to the clamp using a proprietary adhesive system. This method may be used either in the factory or during site work applications. A summary of this technique will now be described. The metalwork is shotblasted and has primer and bonding agents applied as in the hot bond technique. An adhesive solution is applied to both the elastomer sheet and the clamp. The elastomer sheet is then applied to the clamp and rolled to exclude air. The bond between the elastomer and the clamp is achieved by means of an accelerated chemically activated cure in the adhesive system with ultimate bond strength being reached in 14-28 days depending on ambient temperature. In either case the ribs can be made to run vertically or horizontally in the clamp.

The clamp can then be used to join various parts of an offshore platform structure. The ribbed low friction clamp liner provides a number of benefits. The low coefficient of friction between the clamp liner and the structure allows easy slippage of the structure through the clamping system.

# 0148768

in response to wave loading, temperature differentials and the like. The elastomer material absorbs some of the wave loadings and allows positive location. The liner accommodates some eccentricity between the clamp and the structure, and the low friction surface allows slip to take place with the different coatings that may be applied to the structure. A vertically ribbed clamp liner allows positive water drainage and so reduces the risk of crevice corrosion.

The elastomer sheet may alternatively be selected, for example, from the following:

| Hardness (IRHD) | Polychloroprene | EPDM | Natural |
|---|---|---|---|
| 40 +4/-5 | CER 40 | EER 40 | NER 40 |
| 50 +4/-5 | CER 50 | EER 50 | NER 50 |
| 60 +4/-5 | CER 60 | EER 60 | NER 60 |
| 70 +4/-5 | CER 70 | EER 70 | NER 70 |
| 80 +4/-5 | CER 80 | EER 80 | NER 80 |

Modifications and improvements may be made without departing from the scope of the invention.

## CLAIMS

1.  A structural clamp having a body, and spaced resilient projections on the body, the projections having outermost faces of low-friction material for engaging a structure to be clamped.

2.  A clamp as claimed in Claim 1, wherein the projections are in the form of elongate ribs.

3.  A clamp as claimed in Claim 1 or 2, wherein the low-friction material has a coefficient of friction of less than 0.3.

4.  A clamp as claimed in Claim 1, 2 or 3, wherein the low-friction material is polytetrafluorethylene.

5.  A clamp as claimed in any one of the preceding Claims, wherein the projections comprise elastomeric resilient material having the low-friction material bonded thereto.

6.  A clamp as claimed in any one of the preceding Claims, wherein the projections have a height of from 5 to 25 mm.

7.  A clamp as claimed in any one of the preceding Claims, wherein the projections are spaced apart from 10 to 50 mm.

8.  A clamp as claimed in any one of the preceding Claims, wherein the body is of steel and has a lining of resilient material from which the projections extend.

9. . A clamp as claimed in Claim 8, wherein the lining between the projections has a thickness of from 4 to 50 mm.

10.  A resilient lining for use in a structural clamp, the lining having spaced projections whose outermost faces are of low-friction material for engaging a structure to be clamped.

FIG. 1

FIG. 2

2/2

FIG. 3